# EUROPEAN PATENT SPECIFICATION

(11) **EP 3 658 617 B1**
(45) Date of publication and mention of the grant of the patent: **09.10.2024**
(21) Application number: 18738335.1
(22) Date of filing: 12.07.2018
(51) Int. Cl.: C08K 3/36, C08K 5/14, C08L 15/00, C08K 5/00, C08K 9/06

(54) **VULCANIZABLE COMPOSITIONS COMPRISING HYDROGENATED NITRILE-DIENE-CARBOXYLIC ESTER COPOLYMER AND SILICA**
VULKANISIERBARE ZUSAMMENSETZUNGEN, HYDRIERTES NITRIL-DIEN-CARBONSÄUREESTERCOPOLYMER UND KIESELSÄURE UMFASSEND
COMPOSITIONS VULCANISABLES CONTENANT UN COPOLYMÈRE NITRIL-DIEN-ESTER CARBOXYLIQUE ET SILICE

(30) Priority: 25.07.2017 EP 17183169
(43) Date of publication of application: 03.06.2020
(73) Proprietor: ARLANXEO Deutschland GmbH, 41540 Dormagen (DE)
(72) Inventor: LIEBER, Susanna, 67663 Kaiserslautern (DE); SCHNEIDERS, Karola, 51465 Bergisch Gladbach (DE)
(86) International application number: PCT/EP2018/068917
(87) International publication number: WO 2019/020392

(56) References cited:
- WO-A1-2014/111451
- WO-A1-2015/063162
- WO-A1-2015/063164

## Description

The present invention relates to vulcanizable compositions comprising hydrogenated nitrile-diene-carboxylic ester copolymer and silica, to the production thereof and to vulcanizate, and to the use thereof in gaskets and belts.

Both nitrile-butadiene copolymer (nitrile rubber, also referred to in abbreviated form as "**NBR**"), i.e. co-, ter- or quaterpolymers of α,β-ethylenically unsaturated nitrile, at least one conjugated diene and optionally one or more further copolymerizable monomers, and hydrogenated nitrile-butadiene copolymer (**"HNBR"**), in which the sum total of the C=C double bonds in the copolymerized diene units has been wholly or partly hydrogenated, have occupied an established position in the field of specialty elastomers for many years. They possess an excellent profile of properties, in the form of excellent oil resistance, good heat stability and excellent resistance to ozone and chemicals, the latter being even more pronounced in the case of HNBR than in the case of NBR. NBR and HNBR also have very good mechanical and performance characteristics. For this reason, they are widely used in a wide variety of different fields of use, and are used, for example, for production of gaskets, hoses and damping elements in the automotive sector, and also for stators, well seals and valve seals in the oil production sector, and also for numerous parts in the electrical industry, in batteries as binders and separators, and in the field of mechanical engineering and shipbuilding. For many applications it is crucial that the vulcanizate based on HNBR has a low glass transition temperature (Tg) so that the functionality of the vulcanizate is ensured even at low temperatures. In addition, it is also necessary for the vulcanizate to exhibit the smallest possible swelling in contact with for example oil or fuels since otherwise the vulcanizate increases in volume and is no longer fit for use.

For dynamic applications, hydrogenated nitrile-diene copolymer (HNBR; commercially available from ARLANXEO under the Therban^{®} trade name) is frequently used. Particularly in the automotive sector, in the case of the mouldings such as belts or gaskets, in addition to **low swelling** and **excellent low-temperature stability,** ever greater value is additionally being placed on simultaneously **good heat stability.** Under dynamic stress, internal friction frequently results in an increase in temperature of the material compared to its ambient temperature, called heat buildup (HBU). In order to obtain the best possible stability of materials, a low HBU is advantageous. HBU is significantly influenced by filler-filler interaction and polymer-filler interactions. **Good binding or compatibility** of the fillers with the polymer matrix keeps the HBU low.

Vulcanizate formed from vulcanizable compositions are thus expected to have **good thermal stability,** low **oil swelling,** low loss modulus G" and preferably **low evolution of heat under stress (heat buildup).**

A multitude of different HNBR types are commercially available which, depending on the field of application, feature different monomers, molecular weights and polydispersities and consequently feature different mechanical and physical properties. As well as the standard HNBR types composed of nitrile and diene monomers, there is increasing demand particularly for specialty types featuring contents of specific **termonomers** or particular functionalizations.

Examples of known special termonomers include α,β-ethylenically unsaturated **carboxylic acids** (e.g. acrylic acid and methacrylic acid). Terpolymers comprising these termonomers are referred to collectively as HXNBR, wherein the "X" represents the acid group. Examples of these include monocarboxylic acids, dicarboxylic acids and dicarboxylic monoesters (e.g. monomethyl maleate or monobutyl maleate).

Likewise known from EP-A-1852447**,** EP-A-1247835 and EP-A-1243602 are terpolymers comprising α,β-ethylenically unsaturated carboxylic ester units (e.g. monocarboxylic esters such as methyl acrylate and butyl acrylate or dicarboxylic monoesters such as monobutyl maleate).

Also known are hydrogenated nitrile-diene copolymers having **PEG acrylate units.**

EP-A-2868677 discloses hydrogenated nitrile-diene copolymers having 1% to 9% by weight of **monocarboxylic monoester units** having a glass transition temperature of less than -20°C and oil swelling of less than 20%. Explicitly disclosed therein are terpolymers having **small amounts of PEG acrylate units,** for example 4.8% by weight and 7.7% by weight of **methoxyethyl acrylate,** i.e. PEG-1 acrylate, or with 4.1% by weight of PEG-5 methacrylate.

EP-A-2868676 discloses hydrogenated nitrile-diene copolymers having 1% to 9% by weight of α,β-ethylenically unsaturated monomer units containing carbonyl groups. Explicit examples disclosed include hydrogenated terpolymers having PEG-11 monomers.

Terpolymers are often insufficient for more exact adjustment of the desired polymer properties. **Quaternary polymers,** i.e. polymers composed of four monomer units, are finding increasing use. Quaterpolymers comprising α,β-ethylenically unsaturated carboxylic acids and α,β-ethylenically unsaturated carboxylic esters are known.

EP-A-2392599 discloses an at least partially hydrogenated nitrile-butadiene copolymer containing 5% to 60% by weight of α,β-ethylenically unsaturated nitrile units, 20% to 83.9% by weight of conjugated diene units, 0.1% to 20% by weight of **dicarboxylic monoester units,** 11% to 50% by weight of **alkoxyalkyl (meth)acrylate units** having 2 to 8 carbon atoms. Table 2 describes, inter alia, quaterpolymers having a content of 21.3% or 24.8% by weight (27 to 30 mol%) of acrylonitrile, 46.6% or 47.3% by weight (57 mol%) of butadiene, 4.5% to 5% by weight (2 mol%) of mono-n-butyl maleate and 23.0% or 27.1% by weight (11 to 14 mol%) of methoxyethyl acrylate. No vulcanizable compositions comprising silica are disclosed.

JP-A-2012-031311 describes a highly saturated copolymer rubber containing nitrile groups and containing (a) 10.0% to 40.0% by weight of α,β-ethylenically unsaturated nitrile units, (b) 5.5% to 10.0% by weight of α,β-ethylenically unsaturated **dicarboxylic monoester units,** (c) 11.0% to 30.0% by weight of **alkoxyalkyl (meth)acrylate units** having alkoxyalkyl groups having 2 to 8 carbon atoms, and (d) 20.0% to 73.5% by weight of conjugated diene units, where at least some of the conjugated diene units have been hydrogenated. HNBR terpolymers having polyethylene glycol acrylate units are not explicitly disclosed. No vulcanizable compositions comprising silica are disclosed.

WO-A-2015/063162 discloses compositions comprising PEG5 methacrylate HNBR and silica-supported crosslinking agent. The amount of PEG5 methacrylate monomers is very small and is only 4.1% by weight based on the total amount of monomer units.

WO-A-2015/063164 discloses compositions comprising HNBR terpolymer and silica-supported peroxidic crosslinking agent. The amount of polyethylene glycol-functionalized termonomers is small and is less than 10% by weight based on the total amount of monomer units.

WO-A-2014/111451 discloses compositions composed of carboxylated nitrile rubber (XNBR), silicatic filler and silane, and a resol as crosslinking agent. No compositions based on PEG acrylate-HNBR terpolymers are disclosed.

EP-A-3124533 discloses nitrile-containing, highly saturated copolymers containing less than 30 wt% of nitrile units, (b) conjugated diene units, (c) α,β-ethylenically unsaturated dicarboxylic monoester units and (d) methoxyethyl acrylate. The examples explicitly disclose a quaterpolymer containing 24% by weight of acrylonitrile units, 46% by weight of butadiene units, **23% by weight of methoxyethyl acrylate** and 7% by weight of mono-n-butyl maleate. No vulcanizable compositions comprising silica are disclosed.

WO-A-2016/059855 discloses copolymers containing (a) 0.1% to 15% by weight of α,β-ethylenically unsaturated nitrile units, (b) 1% to 10% by weight of α,β-ethylenically unsaturated **dicarboxylic monoester units,** (c) 40% to 75% by weight of α,β-ethylenically unsaturated **monocarboxylic ester units** and (d) 20% to 58.9% by weight of diene units. HNBR terpolymers having polyethylene glycol acrylate units are not explicitly disclosed.

EP16203271.6, which was published at the time of this application, discloses hydrogenated nitrile-diene carboxylic acid copolymers containing 0.1% to 20% by weight of an α,β-ethylenically unsaturated nitrile unit, 15% to 74.9% by weight of the conjugated diene units and **25% to 65% by weight** of an α,β-ethylenically unsaturated **carboxylic ester unit,** where **at least 15% by weight** of the α,β-ethylenically unsaturated carboxylic ester units (c), based on the total amount of all monomer units of 100% by weight, are derived from a PEG acrylate having 1 to 12 repeat ethylene glycol units.

The choice of monomer(s) and the amount of the monomers used has a crucial influence on the polymer properties and is thus not readily predictable.

WO-A-2017/010370 discloses compositions comprising a terpolymer composed of nitrile units, diene units and carboxylic acid units, for example dicarboxylic monoester units, silica having a specific surface area of 70 g/cm² or less, and polyaminic crosslinkers. Examples are vulcanizable compositions comprising a hydrogenated terpolymer of 20.8% by weight of acrylonitrile, 44.2% by weight of butadiene, 4.5% by weight of mono-n-butyl maleate and 30.5% by weight of n-butyl acrylate, silica and polyaminic crosslinker. Polymeric crosslinkers require the presence of free carboxyl groups for crosslinking. There is no description of peroxidic crosslinking.

Vulcanizates formed from vulcanizable compositions known to date were unsatisfactory with regard to low-temperature stability, oil swelling and formation of heat, and were unable to meet the high demands from the automotive industry.

Accordingly, one **problem** addressed by the present invention was that of providing a vulcanizable composition and vulcanizate produced therefrom, having a **low loss factor G", excellent low-temperature stability, low oil swelling** and **low formation of heat** under stress.

A **further problem** was that of providing vulcanizable compositions having a **compression set (CS) no worse,** i.e. no higher, than known from the prior art.

It is known that the addition of light-coloured filler to HNBR leads to lower compressive strength that the addition of carbon black. Thus, a **further problem** addressed was also that of providing a vulcanizable composition in which the **decrease in tensile strength** of the vulcanizates produced therefrom is **at a minimum** compared to the addition of carbon black. A further problem addressed was that of achieving a **balance** in the dynamic mechanical properties of the vulcanizates formed from vulcanizable compositions provided which is similar to that in vulcanizates that are already known.

The **solution** to the problem and the subject-matter of the present invention is thus a **vulcanizable composition** comprising
i) hydrogenated nitrile-diene-carboxylic ester copolymer containing
   (a) **0.1% to 38% by weight,** preferably 10% to 33% by weight and more preferably 8% to 25% by weight of at least one α,β-ethylenically unsaturated **nitrile unit as defined in the claims,**
   (b) **15% to 89.9% by weight,** preferably 21% to 79% by weight and more preferably 25% to 65% by weight of at least one conjugated diene unit as defined in the claims and
   (c) **10% to 65% by weight,** preferably 11% to 60% by weight and particularly preferably 25% to 55% by weight of at least one **α,β-ethylenically unsaturated carboxylic ester unit,**
   where **at least 10% by weight,** preferably at least 15% by weight and more preferably at least 20% by weight of the α,β-ethylenically unsaturated carboxylic ester units (c) based on the total amount of all monomer units of 100% by weight is a **PEG acrylate (d) of the general formula (I)** 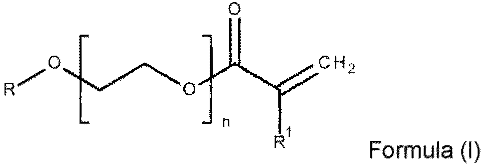 where
   - R: is ethyl, butyl,
   - n: is 2 or 3 and
   - R¹: is CH₃-,
ii) at least one silica, preferably at least one silanized silica as defined in the claims, and
iii) crosslinking agents.

### i) Hydrogenated nitrile-diene-carboxylic ester copolymer

The term **"copolymer"** encompasses polymers having more than one monomer unit.

In one embodiment of the invention, the copolymer is derived exclusively, for example, from the three monomer types (a), (b) and (d) and is therefore a **terpolymer.** Thus, all α,β-ethylenically unsaturated carboxylic ester units (c) of the hydrogenated nitrile-diene-carboxylic ester copolymer are PEG acrylate units (d) of the general formula (I).

Likewise also encompassed by the term copolymer are, for example, **quaterpolymers** derived from the three monomer types (a), (b) and (d) and a further α,β-ethylenically unsaturated carboxylic ester unit (c) other than the PEG acrylate unit (d).

The term **"nitrile-diene-carboxylic ester copolymer"** in the context of the present invention refers to a copolymer containing at least one α,β-ethylenically unsaturated nitrile unit, at least one conjugated diene unit and at least one α,β-ethylenically unsaturated carboxylic ester unit. The term accordingly also encompasses copolymers having two or more α,β-ethylenically unsaturated nitrile monomer units, two or more conjugated diene monomer units and two or more α,β-ethylenically unsaturated carboxylic ester units.

The term **"hydrogenated"** means that the degree of the hydrogenation of the butadiene units in the hydrogenated nitrile-diene-carboxylic ester copolymer is 50% to 100%, preferably 90% to 100%, more preferably 95% to 100% and most preferably 99% to 100%.

### α,β-Ethylenically unsaturated nitrile

The **α,β-ethylenically unsaturated nitrile** used, which forms the **α,β-ethylenically unsaturated nitrile units (a),** may be any known α,β-ethylenically unsaturated nitrile. Preference is given to (C₃-C₅)-α,β-ethylenically unsaturated nitriles such as acrylonitrile, α-haloacrylonitrile, for example α-chloroacrylonitrile and α-bromoacrylonitrile, α-alkylacrylonitrile, for example methacrylonitrile, ethacrylonitrile or mixtures of two or more α,β-ethylenically unsaturated nitriles. Particular preference is given to acrylonitrile, methacrylonitrile, ethacrylonitrile or mixtures thereof. Very particular preference is given to acrylonitrile.

The **amount of α,β-ethylenically unsaturated nitrile units (a)** is typically in the range from 0.1% to 38% by weight, preferably 10% to 33% by weight, more preferably from 8% to 25% by weight, based on the total amount of 100% by weight of all monomer units of the hydrogenated nitrile-diene-carboxylic ester copolymer.

### Conjugated diene

The **conjugated diene** which forms the **conjugated diene units (b)** may be of any type, especially conjugated C₄-C₁₂ dienes. Particular preference is given to 1,3-butadiene, isoprene, 2,3-dimethylbutadiene, 1,3-pentadiene (piperylene) or mixtures thereof. Especially preferred are 1,3-butadiene and isoprene or mixtures thereof. Very particular preference is given to **1,3-butadiene.**

The **amount of conjugated diene** is typically in the range from 15% to 89.9% by weight, preferably 21% to 79% by weight and more preferably 25% to 65% by weight, based on the total amount of 100% by weight of all monomer units of the hydrogenated nitrile-diene-carboxylic ester copolymer.

### α,β-Ethylenically unsaturated carboxylic ester

In addition to the α,β-ethylenically unsaturated nitrile units and the conjugated diene units, the hydrogenated nitrile-diene-carboxylic ester copolymer contains, as a third unit, at least one **α,β-ethylenically unsaturated carboxylic ester unit (c),** where at least 10%, preferably at least 15% and more preferably at least 20% by weight of the α,β-ethylenically unsaturated carboxylic ester unit (c), based on the total amount of all monomer units of 100% by weight, is a **PEG acrylate (d)** of the general formula (I) 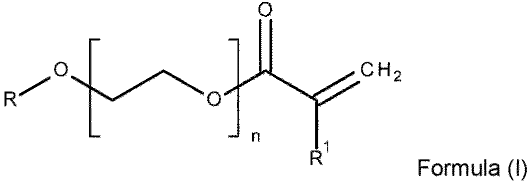 where
- R: is ethyl, butyl,
- n: is 2 or 3 and
- R¹: is hydrogen or CH₃-.

The term **"(meth)acrylate"** in the context of this invention represents "acrylate" and "methacrylate". When the R¹ radical in the general formula (I) is CH₃-, the molecule is a methacrylate.

The term **"polyethylene glycol"** and the abbreviation "PEG" in the context of the present description represent ethylene glycol sections having one repeat ethylene glycol units (PEG-1; n is 1) to 12 repeat ethylene glycol units (PEG-1 to PEG-12; n is 1 to 12).

The term **"PEG acrylate"** is also abbreviated to PEG-X-(M)A where "X" is the number of repeat ethylene glycol units, "MA" is methacrylate and "A" is acrylate.

Acrylate units derived from PEG acrylates of general formula (I) are referred to in the context of the present invention as **"PEG acrylate unit"** (d).

PEG acrylate units (d) according to the claimed invention are derived from the PEG acrylates having the following formulae no. 2, 6, where n is 2 or 3. The PEG acrylate units according to formulae no. 1 and3 to no. 8, wherein n is 2, 3, 4, 5, 6, 7, 8, 9, 10, 11 or 12 are not according to the claims:

| | |
|---|---|
| Ethoxy polyethylene glycol acrylate (Formula no. 1) | 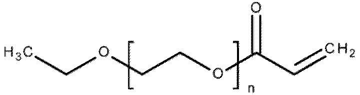 |
| Ethoxy polyethylene glycol methacrylate (Formula no. 2) | 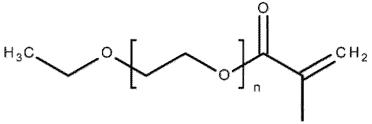 |
| Propoxy polyethylene glycol acrylate (Formula no. 3) | 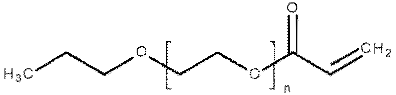 |
| Propoxy polyethylene glycol methacrylate (Formula no. 4) | 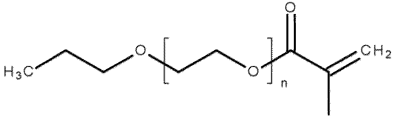 |
| Butoxy polyethylene glycol acrylate (Formula no. 5) | 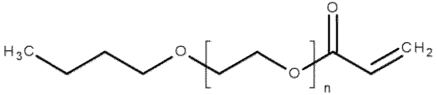 |
| Butoxy polyethylene glycol meth acrylate acrylate (Formula no. 6) | 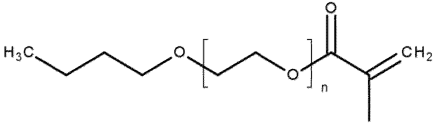 |
| Ethylhexyloxy polyethylene glycol acrylate (Formula no. 7) | 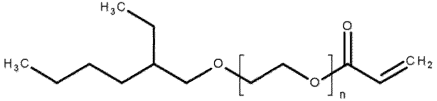 |
| Ethylhexyloxy polyethylene glycol methacrylate (Formula no. 8) | 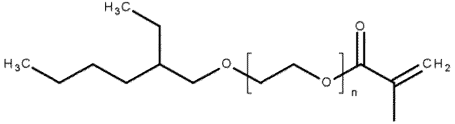 |

Other commonly used designations for ethoxy polyethylene glycol acrylate (formula no. 1) are for example poly(ethylene glycol) ethyl ether acrylate, ethoxy PEG acrylate, ethoxy poly(ethylene glycol) monoacrylate or poly(ethylene glycol) monoethyl ether monoacrylate.

These PEG acrylates can be purchased commercially, for example from Arkema under the Sartomer^{®} trade name, from Evonik under the Visiomer^{®} trade name, or from Sigma Aldrich.

The **amount** of the PEG acrylate units (d) in copolymers of the invention is in the range from 10% to 65% by weight, preferably 15% to 65% by weight and more preferably 25% to 55% by weight, based on the total amount of 100% by weight of all the monomer units.

In an alternative embodiment, the amount of PEG acrylate units (d) is 10% to 65% by weight and the amount of α,β-ethylenically unsaturated carboxylic ester units (c) other than the PEG acrylate units (d) is 0% to 55% by weight based on the total amount of 100% by weight of all monomer units, wherein the total amount of carboxylic ester units does not exceed 65% by weight.

The PEG acrylate units (d) accordingly form some or all of the α,β-ethylenically unsaturated carboxylic ester units (c).

Typical **α,β-ethylenically unsaturated carboxylic ester units (c)** other than the PEG acrylate units (d) are
- **alkyl** (meth)acrylate, especially C₄-C₁₈-alkyl (meth)acrylate, preferably n-butyl, tert-butyl, n-pentyl or n-hexyl (meth)acrylate;
- **alkoxyalkyl** (meth)acrylate, especially C₄-C₁₈-alkoxyalkyl (meth)acrylate, preferably C₄-C₁₂-alkoxyalkyl (meth)acrylate;
- **hydroxyalkyl** (meth)acrylate, especially C₄-C₁₈-hydroxyalkyl (meth)acrylate, preferably C₄-C₁₂-hydroxyalkyl (meth)acrylate;
- **cycloalkyl** (meth)acrylate, in particular C₅-C₁₈-cycloalkyl (meth)acrylate, preferably C₆-C₁₂-cycloalkyl (meth)acrylate, more preferably cyclopentyl (meth)acrylate, cyclohexyl (meth)acrylate, cycloheptyl (meth)acrylate;
- **alkyl cycloalkyl** (meth)acrylate, especially C₆-C₁₂-alkylcycloalkyl (meth)acrylate, preferably C₇-C₁₀-alkylcycloalkyl (meth)acrylate, more preferably methylcyclopentyl (meth)acrylate and ethylcyclohexyl (meth)acrylate;
- **aryl** monoesters, especially C₆-C₁₄-aryl monoesters, preferably phenyl (meth)acrylate or benzyl (meth)acrylate;
- **amino-containing** α,β-ethylenically unsaturated carboxylic esters, for example dimethylaminomethyl acrylate or diethylaminoethyl acrylate;
- α,β-ethylenically **unsaturated** monoalkyl dicarboxylates, preferably
   ∘ alkyl, especially C₄-C₁₈-alkyl, preferably n-butyl, tert-butyl, n-pentyl or n-hexyl, more preferably mono-n-butyl maleate, mono-n-butyl fumarate, mono-n-butyl citraconate, mono-n-butyl itaconate, most preferably mono-n-butyl maleate,
   ∘ alkoxyalkyl, especially C₄-C₁₈-alkoxyalkyl, preferably C₄-C₁₂-alkoxyalkyl,
   ∘ hydroxyalkyl, especially C₄-C₁₈-hydroxyalkyl, preferably C₄-C₁₂-hydroxyalkyl,
   ∘ cycloalkyl, especially C₅-C₁₈-cycloalkyl, preferably C₆-C₁₂-cycloalkyl, more preferably monocyclopentyl maleate, monocyclohexyl maleate, monocycloheptyl maleate, monocyclopentyl fumarate, monocyclohexyl fumarate, monocycloheptyl fumarate, monocyclopentyl citraconate, monocyclohexyl citraconate, monocycloheptyl citraconate, monocyclopentyl itaconate, monocyclohexyl itaconate and monocycloheptyl itaconate,
   ∘ alkylcycloalkyl, especially C₆-C₁₂-alkylcycloalkyl, preferably C₇-C₁₀-alkylcycloalkyl, more preferably monomethylcyclopentyl maleate and monoethylcyclohexyl maleate, monomethylcyclopentyl fumarate and monoethylcyclohexyl fumarate, monomethylcyclopentyl citraconate and monoethylcyclohexyl citraconate; monomethylcyclopentyl itaconate and monoethylcyclohexyl itaconate;
   ∘ aryl, especially C₆-C₁₄-aryl monoesters, preferably monoaryl maleates, monoaryl fumarates, monoaryl citraconates or monoaryl itaconates, particularly preferably monophenyl maleate or monobenzyl maleate, monophenyl fumarate or monobenzyl fumarate, monophenyl citraconate or monobenzyl citraconate, monophenyl itaconate or monobenzyl itaconate,
   ∘ unsaturated polyalkyl polycarboxylates, for example dimethyl maleate, dimethyl fumarate, dimethyl itaconate or diethyl itaconate;
or mixtures thereof.

In an alternative embodiment, the hydrogenated nitrile-diene-carboxylic ester copolymer according to the invention contains not only the α,β-ethylenically unsaturated nitrile unit (a), the conjugated diene unit (b) and the PEG acrylate unit (d) derived from a PEG acrylate of general formula (I), but also, as unsaturated carboxylic ester unit (c), a monoalkyl dicarboxylate unit, preferably monobutyl maleate.

In a preferred hydrogenated nitrile-diene-carboxylic ester copolymer according to the invention, the α,β-ethylenically unsaturated nitrile unit (a) is derived from acrylonitrile, the conjugated diene unit (b) is derived from 1,3-butadiene, , and the α,β-ethylenically unsaturated carboxylic ester unit (c) is exclusively a PEG acrylate unit (d) derived from PEG acrylate of the general formula (I) where n is 2 or 3 where **no further carboxylic ester unit (c)** is present.

In a further preferred hydrogenated nitrile-diene-carboxylic ester copolymer according to the invention, the α,β-ethylenically unsaturated nitrile unit (a) is derived from acrylonitrile, the conjugated diene unit (b) is derived from 1,3-butadiene, and the α,β-ethylenically unsaturated carboxylic ester unit (c) is derived from a first PEG acrylate of the general formula (I) where n is 2 or 3 and an α,β-ethylenically unsaturated carboxylic ester unit (c) other than the PEG acrylate units (d).

In an alternative embodiment, the hydrogenated nitrile-diene-carboxylic ester copolymer contains, as **PEG acrylate units (c),** ethoxy, or butoxy polyethylene glycol methacrylate comprising **2 or 3** repeat ethylene glycol units.

In a further alternative embodiment of the hydrogenated nitrile-diene-carboxylic ester copolymer, in the carboxylic ester monomer of the general formula (I), n is 2 or 3, R is ethyl or butyl and R¹ is methyl; preferably **n is 2, R is butyl and R¹ is methyl.**

Copolymerized monomer units having at least one free carboxylic acid group, for example acrylic acid, methacrylic acid, ethylenically unsaturated dicarboxylic monoesters or ethylenically unsaturated dicarboxylic acids, generally lead to a deterioration in the ageing properties. As a result of free acid groups in the polymer, a drop in extension after ageing at elevated temperatures was detectable. At the same time, a rise in the glass transition temperature was observable, which has adverse effects on the demand for excellent low-temperature flexibility which has been made here. The effect on the ageing properties depends upon factors including the length of the copolymerized PEG acrylate unit, with particular deterioration in the ageing properties especially in the case of a copolymerized PEG-1 unit, i.e. in the case of PEG acrylate units derived from (alkoxy) monoethylene glycol (meth)acrylate.

The hydrogenated nitrile-diene-carboxylic ester copolymer, aside from the α,β-ethylenically unsaturated nitrile unit, the conjugated diene unit and the PEG acrylate unit, does not contain any monomer units having a free carboxylic acid group.

The hydrogenated nitrile-diene-carboxylic ester copolymer does not contain any copolymerizable monomer unit having a free carboxylic acid group (-COOH).

The hydrogenated nitrile-butadiene-PEG acrylate copolymer, aside from the α,β-ethylenically unsaturated nitrile unit, the conjugated diene unit and the PEG acrylate unit, does not contain any further monomer units. This means that it consists solely of α,β-ethylenically unsaturated nitrile units, conjugated diene units and PEG acrylate units derived from a PEG acrylate of the general formula (I).

In a further alternative embodiment the hydrogenated nitrile-diene-carboxylic ester copolymer comprises 8% to 25% by weight of acrylonitrile units, 25% to 65% by weight of 1,3-butadiene units and 25% to 55% by weight of PEG-2 acrylate units or PEG-3 acrylate units.

In a further alternative embodiment, the hydrogenated nitrile-diene-carboxylic ester copolymer contains
- 13% to 17% by weight of α,β-ethylenically unsaturated nitrile unit (a), which is acrylonitrile,
- 36% to 44% by weight of the conjugated diene unit (b), which is 1,3-butadiene, and
- 43% to 47% by weight of PEG acrylate unit (d), derived from a PEG acrylate of general formula (I), preferably butoxy diethylene glycol methacrylate.

The hydrogenated nitrile-diene-carboxylic ester copolymer according to the invention typically has a number-average molecular weight (Mn) of 10 000 g/mol to 2 000 000 g/mol, preferably 50 000 g/mol to 1 000 000 g/mol, more preferably 100 000 g/mol to 500 000 g/mol and most preferably 150 000 g/mol to 300 000 g/mol.

The hydrogenated nitrile-diene-carboxylic ester copolymer according to the invention typically has a polydispersity index (PDI = M_{w}/Mₙ where M_{w} is the weight-average molecular weight) of 1.5 to 6, preferably 2 to 5 and more preferably 2.5 to 4.

The hydrogenated nitrile-diene-carboxylic ester copolymer according to the invention typically has a **Mooney viscosity** (ML1+4@100°C) of 10 to 150, preferably of 20 to 120 and more preferably of 25 to 100.

The terpolymers and quaterpolymers according to the invention which contain repeat PEG-2-MA units are characterized in that they have a very particularly low gel content.

The most preferred hydrogenated nitrile-diene-carboxylic ester copolymer according to the invention is characterized in that it has a glass transition temperature Tg, measured according to DIN 53765, of-40°C or less.

A particular embodiment of the hydrogenated nitrile-diene-carboxylic ester copolymer according to the invention is characterized in that it enables the production of vulcanizates where either
- the **glass transition temperature** Tg, measured according to DIN 53765, has a value of less than -40°C, preferably a value of -44°C or less and more preferably a value of -47°C or less and
- the **swelling in IRM 903,** measured according to DIN ISO 1817 for 7 days at 150°C, has a value of 51% or less, preferably a value of 45% or less and more preferably a value of 43% or less, or
- the **swelling in IRM 903,** measured according to DIN ISO 1817 for 7 days at 150°C, has a value of 20% or less, preferably a value of 18% or less and more preferably a value of 15% or less and
- the **glass transition temperature** Tg, measured according to DIN 53765, has a value of less than -20°C, preferably a value of -23°C or less and more preferably a value of -25°C or less.

### Process for producing unhydrogenated nitrile-diene-carboxylic ester copolymers

The description discloses a process for preparing unhydrogenated nitrile-diene-carboxylic ester copolymers, which are not claimed, characterized in that **0.1% to 38% by weight,** preferably 10% to 33% by weight and more preferably 8% to 25% by weight of at least one α,β-ethylenically unsaturated **nitrile, 15% to 89.9% by weight,** preferably 21% to 79% by weight and more preferably 25% to 65% by weight of at least one conjugated **diene** and **10% to 65% by weight,** preferably 11% to 60% by weight and more preferably 25% to 55% by weight of at least one **α,β-ethylenically unsaturated carboxylic ester,** where **at least 10% by weight,** preferably at least 15% by weight and more preferably 20% by weight, of the α,β-ethylenically unsaturated carboxylic ester based on the total amount of all monomers of 100% by weight is **PEG acrylate of the general formula (I)** 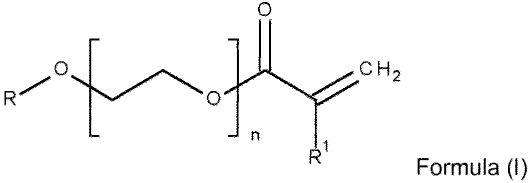 wherein
- R: is branched or unbranched C₁-C₂₀-alkyl, preferably C₁-C₁₀-alkyl, more preferably methyl, ethyl, butyl or ethylhexyl,
- n: is 1 to 12, preferably 2 to 12, more preferably 2 to 8 and most preferably 2 or 3 and
- R¹: is hydrogen or CH₃-,
are subjected to an emulsion polymerization.

The preparation of the unhydrogenated nitrile-diene-carboxylic ester copolymers required for the hydrogenation as an intermediate may be effected by polymerization of the abovementioned monomers and has been described extensively in the literature (e.g. Houben-Weyl, Methoden der Organischen Chemie, vol. 14/1, 30 Georg Thieme Verlag Stuttgart 1961) and is not particularly restricted. It is generally a process in which α,β-ethylenically unsaturated nitrile units, conjugated diene units and PEG acrylate units are copolymerized as desired. The polymerization process used may be any known emulsion polymerization process, suspension polymerization process, bulk polymerization process and solution polymerization process. Preference is given to the emulsion polymerization process. Emulsion polymerization is especially understood to mean a process known per se in which the reaction medium used is usually water (see, inter alia, Römpp Lexikon der Chemie [Römpp's Chemistry Lexicon], volume 2, 10th edition 1997; P. A. Lovell, M. S. El-Aasser, Emulsion Polymerization and Emulsion Polymers, John Wiley & Sons, ISBN: 0471 96746 7; H. Gerrens, Fortschr. Hochpolym. Forsch. 1, 234 (1959)). The incorporation rate of the termonomer may readily be adjusted by the person skilled in the art such that an inventive terpolymer is obtained. The monomers may be initially charged or reacted by incrementation in two or more steps.

### Metathesis and/or hydrogenation:

It is also possible for the production of the unhydrogenated nitrile-diene-carboxylic ester copolymer to be followed by a metathesis reaction for reduction of the molecular weight of the nitrile-diene-carboxylic ester copolymer or a metathesis reaction and a subsequent hydrogenation or a hydrogenation only. These metathesis or hydrogenation reactions are well known to those skilled in the art and are described in the literature. Metathesis is known, for example, from WO-A-02/100941 and WO-A-02/100905 and can be used to reduce the molecular weight.

### Process for producing hydrogenated nitrile-diene-carboxylic ester copolymers

The description also provides a process for producing hydrogenated nitrile-diene-carboxylic ester copolymers, which is not claimed, characterized in that at least one α,β-ethylenically unsaturated nitrile, at least one conjugated diene and at least one PEG acrylate of general formula (I) are subjected to an emulsion polymerization and subsequently hydrogenated.

Following the copolymerization of the unhydrogenated nitrile-diene-carboxylic ester copolymers said copolymers are at least partially hydrogenated (hydrogen addition reaction). In the at least partially hydrogenated nitrile-diene copolymers, at least some of the C=C double bonds of the repeat unit derived from the conjugated diene have been specifically hydrogenated. The degree of hydrogenation of the conjugated diene units (b) in hydrogenated nitrile-diene-carboxylic ester copolymers according to the invention is 50% to 100%, preferably 90% to 100% and particularly preferably 99% to 100%.

The term **"hydrogenated nitrile-diene-carboxylic ester copolymer"** in the context of this invention thus concerns a copolymer containing at least one α,β-ethylenically unsaturated nitrile monomer unit, at least one conjugated diene monomer unit and at least one α,β-ethylenically unsaturated carboxylic ester unit, where the conjugated diene units have been **hydrogenated** to an extent of 50% to 100%, preferably 90% to 100% and more preferably 99% to 100%.

The hydrogenation of nitrile-diene copolymers is known, for example from US-A-3 700 637**,** DE-A-2 539 132**,** DE-A-3 046 008**,** DE-A-3 046 251**,** DE-A-3 227 650**,** DE-A-3 329 974**,** EP-A-111 412**,** FR-B 2 540 503. Hydrogenated nitrile-diene copolymers feature not only high breaking strength, low abrasion, consistently low deformation after compressive and tensile stress and good oil resistance but also in particular remarkable stability to thermal and oxidative influences.

### (ii) Silica

The vulcanizable composition according to the invention, as well as the hydrogenated nitrile-diene-carboxylic ester copolymers (a), additionally comprises **silica.** In the context of this invention, the term "silica" encompasses both unsilanized silica and silanized silica.

The silica in the vulcanizable compositions according to the invention is not restricted and includes natural silica, for example ground silica, silica powder, silica anhydride (silica gel, aerosil etc.), synthetic silica, precipitated silica and the like.

The **specific surface area** of the silica can be measured by the BET method in accordance with ASTM D3037-81.

Examples of suitable silica are known and are available inter alia from Evonik under the Coupsil or Ultrasil trade name, from Lanxess under the Vulkasil trade name, and from Tosoh Silica Corporation under the Nipsil trade name.

The effect of silica (ii) in the vulcanizable compositions according to the invention is that the vulcanizate produced therefrom have lower formation of heat under stress with the same physical properties such as elongation at break, tensile strength, compression strength or hardness.

In a preferred embodiment, the silica (ii) is a **silanized silica.** Silanized silica can typically either be produced by pretreatment of unsilanized silica with silanizing agent **before** addition to the vulcanizable composition according to the invention or can be produced only **in the course of** production of the vulcanizable composition (i.e. in situ) by addition of an unsilanized silica and a silanizing agent.

Silanized silicas are known to the person skilled in the art. Known silanized silicas are, for example, Coupsil^{®} or Nipsil SS^{®}. A preferred silanized silica is Coupsil^{®} from Evonik.

### Silanizing agent (iv)

The **crosslinking agents** and aforementioned additions may each be used in amounts of 0.05 part by weight to 10 parts by weight, preferably 0.1 part by weight to 8 parts by weight, in particular 0.5 part by weight to 5 parts by weight (single dose, based in each case on the active substance), based on 100 parts by weight of hydrogenated nitrile-diene-carboxylic ester copolymer (i).

### Other optional components:

Optionally, vulcanizable compositions of this kind may also comprise one or more **familiar additives and fibrous materials** that are familiar to the person skilled in the art for rubbers. These include ageing stabilizers, reversion stabilizers, light stabilizers, ozone stabilizers, processing aids, mould release agents, plasticizers, for example polyetherester plasticizers, mineral oils, tackifiers, blowing agents, dyes, pigments, waxes, resins, extenders, fillers, for example barium sulfate, titanium dioxide, zinc oxide, calcium oxide, calcium carbonate, magnesium oxide, aluminium oxide, iron oxide, aluminium hydroxide, magnesium hydroxide, aluminosilicates, diatomaceous earth, talc, kaolins, bentonites, carbon nanotubes, graphene, Teflon (the latter preferably in powder form) or silicates, carbon blacks, natural products, for example alumina, kaolins, wollastonite, organic acids, vulcanization retarders, metal oxides, strength members (fibres) made of glass, cords, fabrics, fibres made of aliphatic and aromatic polyamides (Nylon^{®}, Aramid^{®}), polyesters and natural fibre products, salts of unsaturated carboxylic acids, for example zinc diacrylate (ZDA), zinc methacrylates (ZMA) and zinc dimethacrylate (ZDMA), liquid acrylates or other additives known in the rubber industry (Ullmann's Encyclopedia of Industrial Chemistry, VCH Verlagsgesellschaft mbH, D-69451 Weinheim, 1993, vol A 23 "Chemicals and Additives", pp 366-417).

The total amount of additives and fibre materials is typically in the range from 1 to 300 parts by weight based on 100 parts by weight of the nitrile rubber.

### Process for producing a vulcanizable composition comprising hydrogenated nitrile-diene-carboxylic ester copolymers

The description further provides a process, which is not claimed, for producing vulcanizable compositions comprising hydrogenated nitrile-diene-carboxylic ester copolymers by contacting the hydrogenated nitrile-diene-carboxylic ester copolymer (i) with a silica (ii), preferably a silanized silica, and at least one crosslinking agent (iii) and the further components optionally present. This mixing operation may be performed in any mixing units customary in the rubber industry, for example internal mixers, Banbury mixers or rollers. The Vulcanizable compositions according to the invention, as well as the hydrogenated nitrile-diene-carboxylic ester copolymer (i), the silica (ii) and the crosslinking agent (iii), may thus further include silanizing agent (iv) if the silica (ii) is unsilanized silica.

As a result of the addition of silanizing agent (iv), in the production of the vulcanizable composition, silanized silica is prepared in situ by keeping the composition at 100°C.

The effect of silanized silica is better distribution of the filler in the polymer; in particular, filler-filler interaction is reduced. In the case of use of vinylsilanes as silanizing reagent, attachment of the filler to the rubber can be achieved.

There is no further restriction on the silanizing agent. Those contemplated particularly include organic silanes, for example vinyltrimethyloxysilane, vinyldimethoxymethylsilane, vinyltriethoxysilane, vinyltris(2-methoxyethoxy)silane, N-cyclohexyl-3-aminopropyltrimethoxysilane, 3-aminopropyltrimethoxysilane, methyltrimethoxysilane, methyltriethoxysilane, dimethyldimethoxysilane, dimethyldiethoxysilane, trimethylethoxysilane, isooctyltrimethoxysilane, isooctyltriethoxysilane, hexadecyltrimethoxysilane or (octadecyl)methyldimethoxysilane, 3-mercaptomethyltrimethoxysilane, 3-mercaptomethyltriethoxysilane. Rather than silanizing reagents, it is also possible to use further filler-activators, for example interface-active substances such as triethanolamine and ethylene glycols having molecular weights of 74 to 10 000 g/mol. The amount of filler-activators is typically 0 to 10 parts by weight based on 100 parts by weight of the nitrile rubber.

Preferred silanizing agents are Dynasylan^{®} VTEO (commercially available from Evonik), or under the Geniosil^{®} name from Wacker.

The content of silanizing agent (iv) in the vulcanizable composition according to the invention is 0.1 to 5 parts by weight, preferably 0.2 to 3 parts by weight, more preferably 0.3 to 1.5 parts by weight, based on 100 parts by weight of hydrogenated nitrile-diene-carboxylic ester copolymer (i).

In a particularly preferred embodiment, the vulcanizable composition according to the invention, as well as the hydrogenated nitrile-diene-carboxylic ester copolymer and the peroxidic crosslinking agent, comprises silica and silanizing agent.

### iii) Crosslinking agents

Examples of useful **crosslinking agents** include peroxidic crosslinkers, sulfur-containing crosslinkers or aminic crosslinkers, preference being given to peroxidic crosslinkers.

Examples of suitable **peroxidic crosslinkers** include peroxidic crosslinkers such as bis(2,4-dichlorobenzyl) peroxide, dibenzoyl peroxide, bis(4-chlorobenzoyl) peroxide, 1,1-bis(t-butylperoxy)-3,3,5-trimethylcyclohexane, *tert*-butyl perbenzoate, 2,2-bis(t-butylperoxy)butene, 4,4-di-*tert*-butyl peroxynonylvalerate, dicumyl peroxide, 2,5-dimethyl-2,5-di(t-butylperoxy)hexane, *tert*-butyl cumyl peroxide, 1,3-bis(t-butylperoxyisopropyl)benzene, di-t-butyl peroxide and 2,5-dimethyl-2,5-di(t-butylperoxy)hex-3-yne.

Suitable sulfur-containing and aminic crosslinkers are known to those skilled in the art.

Sulfur-containing **crosslinkers** used may, for example, be sulfur in elemental soluble or insoluble form, or sulfur donors.

Examples of useful **sulfur donors** include dimorpholyl disulfide (DTDM), 2-morpholinodithiobenzothiazole (MBSS), caprolactam disulfide, dipentamethylenethiuram tetrasulfide (DPTT) and tetramethylthiuram disulfide (TMTD).

In the **sulfur vulcanization** of the hydrogenated nitrile-diene-carboxylic ester copolymer according to the invention, it is also possible to use further additions which can help to increase the crosslinking yield. In principle, the crosslinking can also be effected with sulfur or sulfur donors alone.

Conversely, however, the crosslinking of the hydrogenated nitrile-diene-carboxylic ester copolymers (i) of the invention may alternatively be effected in the presence of the abovementioned additions only, i.e. without addition of elemental sulfur or sulfur donors.

Suitable **additions** which can help to increase the crosslinking yield are, for example, dithiocarbamates, thiurams, thiazoles, sulfenamides, xanthogenates, guanidine derivatives, caprolactams and thiourea derivatives.

**Dithiocarbamates** used may be, for example: ammonium dimethyldithiocarbamate, sodium diethyldithiocarbamate (SDEC), sodium dibutyldithiocarbamate (SDBC), zinc dimethyldithiocarbamate (ZDMC), zinc diethyldithiocarbamate (ZDEC), zinc dibutyldithiocarbamate (ZDBC), zinc ethylphenyldithiocarbamate (ZEPC), zinc dibenzyldithiocarbamate (ZBEC), zinc pentamethylenedithiocarbamate (Z5MC), tellurium diethyldithiocarbamate, nickel dibutyldithiocarbamate, nickel dimethyldithiocarbamate and zinc diisononyldithiocarbamate. **Thiurams** used may be, for example: tetramethylthiuram disulfide (TMTD), tetramethylthiuram monosulfide (TMTM), dimethyldiphenylthiuram disulfide, tetrabenzylthiuram disulfide, dipentamethylenethiuram tetrasulfide and tetraethylthiuram disulfide (TETD). **Thiazoles** used may be, for example: 2-mercaptobenzothiazole (MBT), dibenzothiazyl disulfide (MBTS), zinc mercaptobenzothiazole (ZMBT) and copper 2-mercaptobenzothiazole. **Sulfenamide derivatives** used may be, for example: N-cyclohexyl-2-benzothiazylsulfenamide (CBS), N-tert-butyl-2-benzothiazylsulfenamide (TBBS), N,N'-dicyclohexyl-2-benzothiazylsulfenamide (DCBS), 2-morpholinothiobenzothiazole (MBS), N-oxydiethylenethiocarbamyl-N-*tert*-butylsulfenamide and oxydiethylenethiocarbamyl-N-oxyethylenesulfenamide. **Xanthogenates** used may be, for example: sodium dibutylxanthogenate, zinc isopropyldibutylxanthogenate and zinc dibutylxanthogenate. **Guanidine derivatives** used may be, for example: diphenylguanidine (DPG), di-o-tolylguanidine (DOTG) and o-tolylbiguanide (OTBG). **Dithiophosphates** used may be, for example: zinc dialkyldithiophosphates (chain length of the alkyl radicals C₂ to C₁₆), copper dialkyldithiophosphates (chain length of the alkyl radicals C₂ to C₁₆) and dithiophosphoryl polysulfide. A caprolactam used may be, for example, dithiobiscaprolactam. **Thiourea derivatives** used may be, for example, N,N'-diphenylthiourea (DPTU), diethylthiourea (DETU) and ethylenethiourea (ETU). Likewise suitable as additions are, for example: zinc diaminediisocyanate, hexamethylenetetramine, 1,3-bis(citraconimidomethyl)benzene and cyclic disulfanes.

The recited additions and the crosslinking agents may be used either individually or in mixtures. It is preferable to employ the following substances for the crosslinking of the hydrogenated nitrile-diene-carboxylic ester copolymers: sulfur, 2-mercaptobenzothiazole, tetramethylthiuram disulfide, tetramethylthiuram monosulfide, zinc dibenzyldithiocarbamate, dipentamethylenethiuram tetrasulfide, zinc dialkyldithiophosphate, dimorpholyl disulfide, tellurium diethyldithiocarbamate, nickel dibutyldithiocarbamate, zinc dibutyldithiocarbamate, zinc dimethyldithiocarbamate and dithiobiscaprolactam.

It may be advantageous to use, as well as these crosslinkers, further additions which can help to **increase the crosslinking yield:** Suitable examples of these include triallyl isocyanurate, triallyl cyanurate, trimethylolpropane tri(meth)acrylate, triallyl trimellitate, ethylene glycol dimethacrylate, butanediol dimethacrylate, zinc diacrylate, zinc dimethacrylate, 1,2-polybutadiene or N,N'-m-phenylenebismaleimide.

The **total amount of the crosslinking agent(s)** is typically in the range from 1 to 20 parts by weight, preferably in the range from 1.5 to 15 parts by weight and more preferably in the range from 2 to 10 parts by weight, based on 100 parts by weight of hydrogenated nitrile-diene-carboxylic ester copolymer (i).

### Process for producing vulcanizates comprising hydrogenated nitrile-diene-carboxylic ester copolymers

The invention further provides the **process for producing vulcanizates,** in the form of mouldings, comprising hydrogenated nitrile-diene-carboxylic ester copolymers **(vulcanization),** characterized in that the vulcanizable mixture comprising hydrogenated nitrile-diene-carboxylic ester copolymers, silica and crosslinking agents is subjected to a vulcanization, in a moulding process and at temperatures in the range from 100°C to 250°C, more preferably at temperatures in the range from 120°C to 250°C and most preferably temperatures in the range from 130°C to 250°C. For this purpose, the vulcanizable mixtures are subjected to further processing with calendars, rolls or extruders. The preformed mass is then vulcanized in presses, autoclaves, hot air systems or in what are called automatic mat vulcanization systems ("Auma"), and preferred temperatures have been found to be in the range from 100°C to 250°C, particularly preferred temperatures in the range from 120°C to 250°C and very particularly preferred temperatures in the range from 130°C to 250°C. The vulcanization time is typically 1 minute to 24 hours and preferably 2 minutes to 1 hour. Depending on the shape and size of the vulcanizates, a second vulcanization by reheating may be necessary to achieve complete vulcanization.

The invention further provides the thus obtainable **vulcanizates** of vulcanizable compositions according to the invention comprising hydrogenated nitrile-diene-carboxylic ester copolymer.

The invention also provides for the **use** of the vulcanizates produced from vulcanizable compositions according to the invention which comprise hydrogenated nitrile-diene-carboxylic ester copolymers for production of mouldings selected from the group consisting of belts, gaskets, rollers, footwear components, hoses, damping elements, stators and cable sheaths, preferably belts and gaskets.

The invention thus provides vulcanizates composed of vulcanizable compositions according to the invention in the form of **mouldings,** preferably selected from belts, gaskets, rollers, footwear components, hoses, damping elements, stators and cable sheaths, preferably belts and gaskets. The methods usable by way of example for this purpose, such as moulding, injection moulding or extrusion methods and the corresponding injection moulding apparatuses or extruders, are sufficiently well-known to the person skilled in the art. In the production of these mouldings, it is possible to supplement the vulcanizable compositions according to the invention with the standard auxiliaries which are known to those skilled in the art and have to be suitably selected sequence of metered addition may be readily determined by the person skilled in the art through suitable tests.

Two possible procedural variants are set out hereinbelow by way of example:

### Process A: Production in an internal mixer

Preference is given to internal mixers with intermeshing rotor geometry.

At the time of commencement, the internal mixer is charged with the hydrogenated nitrile-diene-carboxylic ester copolymer in bale form, and the bales are comminuted. After a suitable mixing period, the fillers and additives are added. The mixing is effected under temperature control, with the proviso that the mixture remains at a temperature in the range from 80°C to 150°C for a suitable time. After a further suitable mixing period, the further composition constituents are added, such as optionally stearic acid, antioxidants, plasticizers, white pigments (for example titanium dioxide), dyes and other processing actives. After a further suitable mixing period, the internal mixer is vented and the shaft is cleaned. After a further suitable period of time, the internal mixer is emptied to obtain the vulcanizable compositions. Suitable periods of time are understood to mean a few seconds to a few minutes. When silica and silanes are used, good silanization of the filler in the internal mixer can be advantageous. For this purpose, it is advantageous to mix the mixture above 100°C for at least 3 min in order to obtain homogeneous silanization of the silica surface. Alternatively, it is possible to use silanized silica, which means that the mixing time can be shortened. The crosslinking chemicals may either be incorporated in a separate step on a roller, especially when mixing is performed at an elevated mixing temperature, or co-added directly in the internal mixer. It must be ensured in this case that the mixing temperature is below the reaction temperature of the crosslinking chemicals.

The vulcanizable compositions thus produced can be assessed in a customary manner, for instance by Mooney viscosity, by Mooney scorch or by a rheometer test.

### Process B: Production on a roller

When rollers are used as mixing units the hydrogenated nitrile-diene-carboxylic acid copolymer is fed onto the roller first. Once a homogeneous milled sheet has been formed the fillers, plasticizers and other additives with the exception of the crosslinking chemicals are added. After incorporation of all components, the crosslinking chemicals are added and incorporated. The mixture is then incised three times on the right and three times on the left and doubled over 5 times. The finished milled sheet is rolled to the desired thickness and subjected to further processing according to the desired test methods.

The description provides the **unhydrogenated** nitrile-diene-carboxylic ester copolymers (which are not claimed) needed for preparation of the hydrogenated nitrile-diene-carboxylic ester copolymers according to the invention, containing
(a) **0.1% to 38% by weight,** preferably 10% to 33% by weight and more preferably 8% to 25% by weight of at least one α,β-ethylenically unsaturated **nitrile unit,** which is acrylonitrile,
(b) **15% to 89.9% by weight,** preferably 21% to 79% by weight and more preferably 25% to 65% by weight of at least one conjugated **diene unit,** which is 1,3-butadiene and
(c) **10% to 65% by weight,** preferably 11% to 60% by weight and particularly preferably 25% to 55% by weight of at least one **α,β-ethylenically unsaturated carboxylic ester unit,**

where **at least 10% by weight,** preferably at least 15% by weight and more preferably at least 20% by weight of the α,β-ethylenically unsaturated carboxylic ester units (c) based on the total amount of all monomer units of 100% by weight is derived from a **PEG acrylate (d) of the general formula (I)** 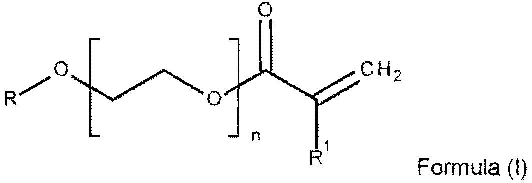 where
   - R: is ethyl or butyl,
   - n: is 2 or 3 and
   - R¹: is CH₃-..
using customary art knowledge, for example fillers, filler-activators, accelerators, crosslinkers, antiozonants, antioxidants, processing oils, extender oils, plasticizers, activators or scorch inhibitors.

The particular advantage of the invention is that the vulcanizable compositions according to the invention which comprise hydrogenated nitrile-diene-carboxylic ester copolymer, silica and crosslinking agent are suitable for production of vulcanizate which have and are thus superior to the vulcanizates based on the known HNBR copolymers.

### Examples:

### Test methods:

The **RDB content (residual double bond content)** in % is determined by the following FT-IR measurement: The IR spectra of the hydrogenated nitrile-diene-carboxylic ester copolymer before, during and after the hydrogenation are recorded by means of an AVATAR 360 Thermo Nicolet FT-IR spectrometer IR instrument. To this end a monochlorobenzene solution of the hydrogenated nitrile-diene-carboxylic ester copolymer is applied to an NaCl platelet, dried to a film and analysed. The degree of hydrogenation is determined by FT-IR analysis according to the ASTM D 567095 method.

The **Mooney viscosity** values (ML1+4@100°C) are determined in each case by means of a shearing disc viscometer in accordance with ASTM D1646-07.

For the **tensile testing,** 2 mm sheets were produced by vulcanization of the vulcanizable mixture at 180°C. The dumbbell-shaped test specimens were punched out of these plaques and tensile strength and elongation were determined to ASTM D2240-81.

**Hardness** was determined with a durometer to ASTM D2240-81.

The **glass transition temperature** was obtained by means of a DSC measurement according to ASTM E 1356-03 or according to DIN 53765. For this purpose, between 10 mg and 15 mg of the sample were weighed into an aluminium boat and sealed. The boat was heated twice from -150°C to 150°C at a heating rate of 10 K/min in a DSC instrument from TA Instruments. The glass transition temperature was determined from the second heating curve by the standard mean value method.

**Swelling:** To determine swelling, dumbbell-shaped test specimens as used for tensile testing were stored in IRM903 according to DIN ISO 1817 at 150°C for 168 h. Thereafter, the samples were measured and weighed, and the volume swelling and increase in mass were determined. Subsequently, tensile strength and elongation were determined to ASTM D2240-81.

**Compression set** was determined according to DIN ISO 815-2.

### Measurement of loss modulus G"

Loss modulus was determined in an amplitude-dependent measurement using a Alpha RPA 2000 Rubber Process Analyzer at 1 Hz and 60°C. The shear rates were 0.65/s at 10%, 1.29/s at 20%, 1.94/s at 30%, 3.23/s at 50%, and 6.46/s at 100%.

### The following substances were used in the examples:

The following chemicals were purchased as commercial products from the companies specified in each case or originate from production plants of the companies specified.

### For the polymerization:

| | |
|---|---|
| **PEG-2-MA** | butoxy diethylene glycol methacrylate (BDGMA), molecular weight 230.3 g/mol, Evonik Industries AG |
| **PEG-3-MA** | ethoxy triethylene glycol methacrylate, molecular weight 246.3 g/mol, Evonik Industries AG |
| **Disponil^{®} SDS G** | sodium lauryl sulfate; BASF |

### Na salt of disproportionated resin acid CAS 61790-51-0

| | |
|---|---|
| **Na₂CO₃** | Merck KGaA |
| **t-DDM** | tertiary dodecyl mercaptan; LANXESS Deutschland GmbH |
| **Glidox^{®} 500** | pinane hydroperoxide; Renessenz |
| **"Premix solution Fe(II)SO₄"** | contains 0.986 g of Fe(II)SO₄*7 H₂O and 2.0 g of Rongalit^{®} C in 400 g of water |
| **Rongalit C^{®}** | sodium salt of a sulfinic acid derivative; commercial product from BASF |
| **Diethylhydroxylamine** | Merck KGaA |
| **Vulkanox^{®} BKF** | 2,2'-methylenebis(4-methyl-6-*tert*-butyl-phenol); LANXESS Deutschland GmbH |

### Substances used in the vulcanizable composition:

| | |
|---|---|
| **Therban^{®} 3407** | hydrogenated nitrile-diene rubber (HNBR) with acrylonitrile content 34% by weight; < 0.9% RDB and a Mooney viscosity ML(1+4@100°C) of 70 |
| **Therban^{®} LT 1707** | hydrogenated nitrile-diene rubber (HNBR) with acrylonitrile content 17% by weight; < 0.9% RDB and a Mooney viscosity ML(1+4@100°C) of 70 |
| **Corax^{®} N330** | carbon black; Orion Engineered Carbons |
| **Coupsil^{®} VP 6508** | silanized silica (available from Evonik) |
| **Vulkasil^{®} N** | silica (precipitated silica) (available from LANXESS Deutschland GmbH) |
| **Dynasylan** ^{®} **VTEO** | vinyltriethoxysilane, silanizing agent (available from Evonik) |
| **Rhenofit**^{®} **DDA** | 70% masterbatch based on octylated diphenylamine; Rheinchemie |
| **Vulkanox^{®} ZMB2/C5** | zinc salt of 4- and 5-methyl-2-mercaptobenzothiazole; LANXESS Deutschland GmbH |
| **Maglite^{®} DE** | magnesium oxide; CP Hall. |
| **Kettlitz^{®}-TAIC** | triallyl isocyanurate, 70% masterbatch; Kettlitz Chemie GmbH & Co KG. |
| **Perkadox^{®} 14-40 B-PD** | di(tert-butylperoxyisopropyl)benzene 40% supported on silica; Akzo Nobel Polymer Chemicals BV |

### I Preparation of the nitrile-butadiene-PEG acrylate copolymers (PEG-NBR 1 and 2)

PEG-NBR 1 and 2 as used in the example series which follow were produced according to the base formulation specified in Table 1, with all feedstocks stated in % by weight based on 100% by weight of the monomer mixture. Table 1 also gives the particular polymerization conditions (temperature, conversion and time).

**Table 1: Preparation of the nitrile-butadiene-PEG acrylate copolymers (PEG-NBR 1-2)**

| **PEG-NBR** | **1** | **2** |
|---|---|---|
| Acrylonitrile | 36 | 18 |
| 1,3-Butadiene | 49 | 31 |
| Ethoxy triethylene glycol methacrylate (PEG-3-MA) | 15 | |
| Butoxy diethylene glycol methacrylate (PEG-2-MA) | | 51 |
| Disponil^{®} SDS G | 2.4 | 2.4 |
| Na salt of the disproportionated resin acid | 0.5 | 0.5 |
| Na₂CO₃ | 0.12 | 0.12 |
| pH | 7.5±0.5 | 7.5±0.5 |
| t-DDM | 0.57 | 0.25 |
| Glidox^{®} 500 | 0.02 | 0.02 |
| Premix solution FeSO₄ | 0.017 | 0.02 |
| Diethylhydroxylamine | 0.2 | 0.2 |
| Vulkanox^{®} BKF | 0.1 | 0.1 |
| Polymerization temperature [°C] | 12±0.5 | 12±0.5 |
| Polymerization conversion [%] | 74 | 75 |
| Polymerization time [h] | 7 | 6.4 |

The nitrile-butadiene-PEG acrylate copolymers were prepared batchwise in a 20 l autoclave with stirrer system. In each of the autoclave batches, 4.73 kg of the monomer mixture and a total amount of water of 10 kg were used, as was EDTA in an equimolar amount based on the Fe(II). 9 kg of this amount of water were initially charged with the emulsifier in the autoclave and purged with a nitrogen stream. Thereafter, the monomers and the amount of the t-DDM molecular weight regulator specified in Table 1 were added and the reactor was closed. Once the reactor contents had been thermostatted, the polymerizations were initiated by addition of the premix solutions and of pinane hydroperoxide (Glidox^{®} 500).

The progress of the polymerization was monitored by gravimetric conversion determinations. Upon attainment of the conversions reported in Table 1 the polymerization was terminated by adding an aqueous solution of diethylhydroxylamine. Unconverted monomers and other volatile constituents were removed by means of steam distillation.

Prior to the coagulation of each NBR latex, a 45% dispersion of Vulkanox^{®} BKF (0.1% by weight of Vulkanox^{®} BKF based on NBR rubber) was added to each. This was followed by coagulation with CaCl₂, washing and drying of the crumbs obtained.

The dried PEG-NBR rubbers were characterized by the Mooney viscosity, the ACN content and the glass transition temperature, and the content of the termonomers was determined by 1H NMR analysis (Table 2).

**Table 2: Properties of the nitrile-butadiene-PEG acrylate copolymers (PEG-NBR 1 and 2)**

| **PEG-NBR** | **1** | **2** |
|---|---|---|
| **ACN content [% by wt.]** | 31 | 15.9 |
| **BD content [% by wt.]** | 53.9 | 25.1 |
| **PEG-3-MA [% by wt.]** | 15.1 | |
| **PEG-2-MA [% by wt.]** | | 49 |
| **Mooney viscosity ML(1+4@100°C)** | 28 | 10 |
| **Glass transition temperature Tg of crude polymer [°C]** | -26 | -40 |

### II Preparation of the hydrogenated nitrile-butadiene-PEG acrylate copolymers (PEG-HNBR 1 and 2)

### Procedure for hydrogenations

The hydrogenations which follow were performed using the above-synthesized nitrile-butadiene-PEG acrylate copolymers (PEG-NBR 1 and 2).

Dry monochlorobenzene (MCB) was sourced from VWR, Wilkinson catalyst from Materia Inc. and triphenylphosphine from VWR, and were used as obtained. The results of the hydrogenation experiments are summarized in Table 2.

Hydrogenations 1 - 5 were performed in a 10 l high-pressure reactor under the following conditions:

| | |
|---|---|
| Solvent: | monochlorobenzene |
| Solids concentration: | 12-13% by weight of PEG-NBR terpolymer in MCB (518 g) |
| Reactor temperature: | 137-140°C |
| Reaction time: | up to 4 hours |
| Catalyst & loading: | Wilkinson catalyst: 0.337 g (0.065 phr); |
| | Co-catalyst: triphenylphosphine: 5.18 g (1.0 phr) |
| Hydrogen pressure (p H₂): | 8.4 MPa |
| Stirrer speed: | 600 rpm |

The PEG-NBR-containing polymer solution is degassed three times with H₂ (23°C, 2 MPa) with vigorous stirring. The temperature of the reactor was raised to 100°C and the H₂ pressure to 6 MPa. 123.9 g of a chlorobenzene solution consisting of Wilkinson catalyst (0.337 g) and triphenylphosphine (5.18 g) were added and the pressure was raised to 8.4 MPa, while the reactor temperature was adjusted to 137-140°C. Both parameters were kept constant during the reaction. The course of the reaction was monitored by means of measurement of the residual double bond content (RDB) of the nitrile-butadiene-PEG acrylate copolymer by means of IR spectroscopy. The reaction was ended after not more than 4 hours and/or attainment of an RDB content of < 1% by releasing the hydrogen pressure.

The hydrogenated PEG-HNBR thus formed was isolated from the solution by means of steam coagulation. For this purpose, the chlorobenzene solution was diluted to a polymer content of 7% by weight and metered continuously into a stirred, water-filled glass reactor preheated to 100°C. At the same time, 0.5 bar steam was introduced into the coagulation water. The polymer crumbs thus precipitated were roughly dewatered and then dried to constant weight at 55°C under reduced pressure.

**Table 3: Properties of the hydrogenated nitrile-butadiene-PEG acrylate copolymers (PEG-HNBR 1 and 2)**

| **PEG-HNBR** | **1** | **2** |
|---|---|---|
| | | |
| **PEG-NBR** | 1 | 2 |
| **RDB [%]** | < 0,5 | < 0,5 |
| **Mooney viscosity ML(1+4@100°C)** | 129 | 61 |
| **Glasübergangstemperatur Tg Rohpolymer [°C]** | -30 | -50 |

### III Production of vulcanizates of the hydrogenated nitrile-diene-carboxylic ester copolymers:

### Production of the vulcanizable compositions:

All the compositions were produced on a mixing roll mill. The diameter of the rollers was 80 mm, the length 200 mm. The rollers were preheated to 40°C, the speed of the front roller was 16.5 rpm and that of the rear roller was 20 rpm, thereby achieving a friction of 1:1.2.

The rubber was initially charged and mixed for one (1) minute until a smooth milled sheet had formed. Subsequently, first the carbon black, then the additives and finally the crosslinking chemicals were incorporated. The total mixing time was 5 to 8 minutes.

**Table 4a: Composition and properties of the vulcanizates (inventive examples are identified by an asterisk *).**

| **Vulcanizate** | **V1** | **V2** | **I1*** | **V3** | **I2*** | **V4** |
|---|---|---|---|---|---|---|
| **HNBR copolymer** | **parts** | **parts** | **parts** | **parts** | **parts** | **parts** |
| PEG-HNBR 1 | 100 | | 100 | | 100 | |
| HNBR (Therban^{®} 3407) | | 100 | | 100 | | 100 |

| **Other components** | **phr** | **phr** | **phr** | **phr** | **phr** | **phr** |
|---|---|---|---|---|---|---|
| Corax^{®} N330 | 30 | 30 | | | | |
| Coupsil^{®} VP 6508 | | | 25 | 25 | | |
| Vulkasil^{®} N | | | | | 25 | 25 |
| Dynasilan^{®} VTEO | | | | | 0.5 | 0.5 |
| Rhenofit^{®} DDA 70 | 1.4 | 1.4 | 1.4 | 1.4 | 1.4 | 1.4 |
| Vulkanox^{®} ZMB2/C5 | 0.4 | 0.4 | 0.4 | 0.4 | 0.4 | 0.4 |
| Maglite^{®} DE | 2 | 2 | 2 | 2 | 2 | 2 |
| Kettlitz^{®}-TAIC | 1.5 | 1.5 | 1.5 | 1.5 | 1.5 | 1.5 |
| Perkadox^{®} 14-40 B-PD | 7 | 7 | 7 | 7 | 7 | 7 |

| **Vulcanizate properties** | | | | | | |
|---|---|---|---|---|---|---|
| Glass transition temp. (Tg) [°C] | -33 | -26 | -33 | -26 | -32 | -26 |
| Hardness [ShA] | 58 | 62 | 55 | 64 | 56 | 63 |
| M10 [MPa] | 0.5 | 0.5 | 0.4 | 0.6 | 0.4 | 0.6 |
| M25 [MPa] | 0.8 | 0.9 | 0.7 | 1 | 0.8 | 1 |
| M50 [MPa] | 1.2 | 1.3 | 1.1 | 1.5 | 1.1 | 1.4 |
| M100 [MPa] | 2.4 | 2.5 | 1.9 | 2.7 | 1.9 | 2.5 |
| Elongation at break [%] | 285 | 307 | 240 | 239 | 290 | 241 |
| Tensile strength [MPa] | 22 | 25 | 10 | 14 | 15 | 13 |

Vulcanizates comprising conventional HNBR Therban^{®} 3407 and silanized silica (V3, Coupsil^{®}) or comprising silica and silanizing agent (V4, Vulkasil^{®} N and Dynasilan^{®} VTEO), as compared with vulcanizates comprising conventional HNBR Therban^{®} 3407 and carbon black (V2, Corax^{®} N330), have an increase in tensile strength by 11 to 12 MPa.

By comparison, in the case of vulcanizate based on the hydrogenated nitrile-diene-carboxylic ester copolymers, the tensile strength in the case of use of silica and silane is reduced to a significantly lesser degree (namely by only 7 MPa) than in the case of use of the already silanized silica (Coupsil^{®} VP 6508). This gives rise to a **synergistic effect** of the hydrogenated nitrile-diene-carboxylic ester copolymer and of the in situ silanization of the silica with silanizing agent.

**Table 4b: Composition and properties of the vulcanizates (inventive examples are identified by an asterisk *).**

| **Vulcanizate** | **V5** | **V6** | **I3*** | **V7** |
|---|---|---|---|---|
| **HNBR copolymer** | **parts** | **parts** | **parts** | **parts** |
| PEG-HNBR 2 | 100 | | 100 | |
| HNBR (Therban^{®} LT 1707) | | 100 | | 100 |

| **Other components** | **phr** | **phr** | **phr** | **phr** |
|---|---|---|---|---|
| Corax^{®} N330 | 30 | 30 | | |
| Coupsil^{®} VP 6508 | | | 25 | 25 |
| Rhenofit^{®} DDA 70 | 1.4 | 1.4 | 1.4 | 1.4 |
| Vulkanox^{®} ZMB2/C5 | 0.4 | 0.4 | 0.4 | 0.4 |
| Maglite^{®} DE | 2 | 2 | 2 | 2 |
| Kettlitz^{®}-TAIC | 1.5 | 1.5 | 1.5 | 1.5 |
| Perkadox^{®} 14-40 B-PD | 7 | 7 | 7 | 7 |

| **Vulcanizate properties** | | | | |
|---|---|---|---|---|
| Glass transition temp. (Tg) [°C] | -47 | -41 | -47 | -41 |
| Hardness [ShA] | 48 | 53 | 51 | 55 |
| M10 [MPa] | 0.3 | 0.3 | 0.3 | 0.4 |
| M25 [MPa] | 0.5 | 0.6 | 0.5 | 0.7 |
| M50 [MPa] | 0.8 | 1 | 0.9 | 1 |
| M100 [MPa] | 1.8 | 1.8 | 2 | 1.7 |
| Elongation at break [%] | 231 | 287 | 197 | 287 |
| Tensile strength [MPa] | 9.6 | 17 | 6.7 | 11.9 |

The inventive mixture I3*, in the case of use of silanized silane, by comparison with the carbon black-containing comparative vulcanizate V5, has a reduction in tensile strength of only 2.9 MPa. By contrast, the exchange of carbon black in the comparative vulcanizate V6 for silanized silica in the comparative vulcanizate V7 leads to a reduction of 5.1 MPa.

**Table 5. Vulcanizate properties after storage at 150°C for 14 days**

| **Vulcanizate** | **V1** | **V2** | **I1*** | **V3** | **I2*** | **V4** |
|---|---|---|---|---|---|---|
| Hardness [ShA] | 71 | 69 | 64 | 70 | 66 | 70 |
| Change in hardness [ShA] | 13 | 7 | 9 | 6 | 10 | 7 |
| M10 [MPa] | 0.8 | 0.8 | 0.6 | 0.7 | 0.6 | 0.8 |
| M25 [MPa] | 1.5 | 1.4 | 1 | 1.3 | 1.1 | 1.4 |
| M50 [MPa] | 2.6 | 2.1 | 1.6 | 2 | 1.7 | 2.4 |
| M100 [MPa] | 6.3 | 4.8 | 3 | 4.2 | 3.2 | 6.1 |
| Elongation at break [%] | 205 | 261 | 212 | 215 | 260 | 139 |
| Tensile strength [MPa] | 21.1 | 23.7 | 11.8 | 16.3 | 18.2 | 11.4 |
| Change in elongation at break [%] | -28 | -19 | -12 | -10 | -10 | -42 |
| Change in tensile strength [%] | -2.3 | -12 | 16.8 | 19 | 22.1 | -13.6 |

In the case of conventional hydrogenated nitrile-diene copolymer Therban^{®} 3407, the ageing of the vulcanizate at 150°C for 2 weeks leads to an increase in hardness and hence a deterioration of 7 points from 62 to 69 (V2). The addition of silanized silica (V3) or silica and silanizing agent (V4) results in virtually no change since there is a rise in hardness by 6 or 7 points here too.

By contrast, the addition of silanized silica (I1*) and silica and silanizing agent (I2*) leads to a smaller increase in hardness of 9 and 10 points compared to the increase in the hardness of a vulcanizate (V1) containing PEG-HNBR according to the invention but not containing any silanized silica or silica and silanizing agent.

The use of silica thus brings about a reduced increase in hardness in the course of ageing of vulcanizates based on PEG-HNBR.

**Table 6. Compression set after ageing at -20°C for 24 hours**

| **Vulcanizate** | **V1** | **V2** | **I1*** | **V3** | **I2*** | **V4** | **V5** | **V6** | **I3*** | **V7** |
|---|---|---|---|---|---|---|---|---|---|---|
| Compression set [%] | 41 | 90 | 36 | 88 | 40 | 94 | 30 | 30 | 23 | 28 |

The inventive vulcanizates I1 and I2 have a **similar or** even lower and hence **better compression set** than the comparative vulcanizates V2, V3 and V4 based on conventional hydrogenated nitrile-diene copolymer Therban^{®} 3407.

The inventive mixture I3* has an improved compression set at -20°C compared to the comparative vulcanizate V5; the reduction in CS is optimized in the case of use of PEG HNBR with silica compared to the use of Therban LT 1707 with silica.

**Table 7. Vulcanizate properties after ageing in IRM 903 at 150°C for 168 hours**

| **Vulcanizate** | **V1** | **V2** | **I1*** | **V3** | **I2*** | **V4** |
|---|---|---|---|---|---|---|
| Change in volume [%] | 14 | 21 | 14 | 21 | 14 | 18 |
| Hardness [ShA] | 53 | 54 | 53 | 59 | 54 | 59 |
| Change in hardness [ShA] | -5 | -8 | -2 | -5 | -2 | -5 |
| M10 [MPa] | 0.4 | 0.4 | 0.4 | 0.5 | 0.4 | 0.5 |
| M25 [MPa] | 0.8 | 0.8 | 0.7 | 1 | 0.8 | 1 |
| M50 [MPa] | 1.2 | 1.3 | 1.2 | 1.6 | 1.2 | 1.5 |
| M100 [MPa] | 2.8 | 3 | 2.2 | 3.2 | 2.2 | 3.1 |
| Elongation at break [%] | 202 | 233 | 192 | 191 | 218 | 201 |
| Tensile strength [MPa] | 13.3 | 16.3 | 8.1 | 11.3 | 10.8 | 12.5 |
| Change in elongation at break [%] | -29 | -28 | -20 | -20 | -25 | -17 |
| Change in tensile strength [%] | -38 | -39 | -20 | -18 | -28 | -5 |

The inventive vulcanizates I1 and I2 have an identical change in volume and hence no deterioration.

| **Vulcanizate** | **V5** | **V6** | **I3*** | **V7** |
|---|---|---|---|---|
| Change in volume [%] | 36 | 51 | 36 | 51 |
| Hardness [ShA] | 38 | 39 | 43 | 41 |
| Change in hardness [ShA] | -10 | -13 | -8 | -14 |
| M10 [MPa] | 0.2 | 0.2 | 0.3 | 0.3 |
| M25 [MPa] | 0.4 | 0.5 | 0.5 | 0.5 |
| M50 [MPa] | 0.7 | 0.8 | 1 | 1 |
| M100 [MPa] | 1.9 | 2.3 | 2.7 | 2.3 |
| Elongation at break [%] | 165 | 171 | 139 | 163 |
| Tensile strength [MPa] | 5.8 | 7.5 | 4.8 | 5.8 |
| Change in elongation at break [%] | -29 | -40 | -29 | -43 |
| Change in tensile strength [%] | -39.6 | -55.9 | -28.4 | -51.3 |

The inventive vulcanizate I3* has comparable swelling (= change in volume) to V5 and hence no deterioration in properties on exchange of the filler and simultaneous reduction from 30 parts by weight to 25 parts by weight.

| | **G" (10%)** | **G" (100%)** |
|---|---|---|
| PEG HNBR 1 CB | 242 | 192 |
| PEG HNBR 2 CB | 175 | 134 |
| Therban 3407 CB | 374 | 294 |
| Therban LT 1707 CB | 232 | 179 |
| PEG HNBR 1 Coupsil | 193 | 164 |
| PEG HNBR 2 Coupsil | 164 | 120 |
| Therban 3407 Coupsil | 340 | 260 |
| Therban LT 1707 Coupsil | 207 | 155 |

The inventive vulcanizates I1* and I2* comprising PEG-HNBR and silica/silanized silane have a significantly lower loss factor G" than PEG-HNBR filled with carbon black. The change in the loss factor G" in the case of Therban 3407 and Therban LT 1707, which do not contain any PEG acrylate, is significantly smaller. Thus, the synergistic effect of silica with the PEG acrylate units results in a lower loss factor and hence less energy is dissipated, and hence lower evolution of heat is expected in the product under dynamic stress.

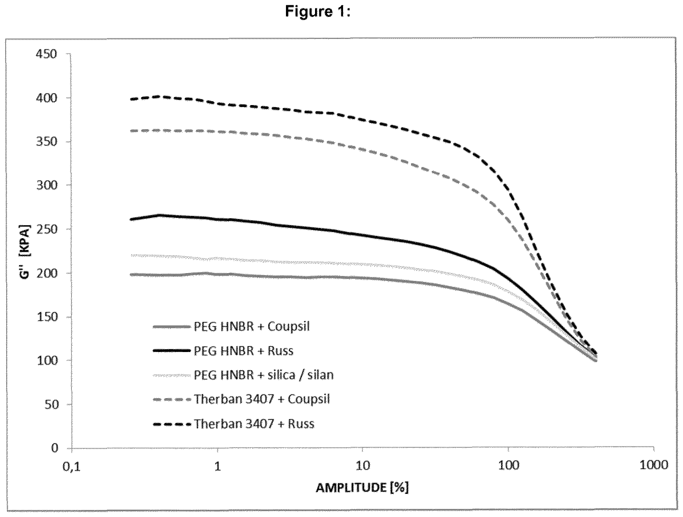

As a result of the use of the hydrogenated nitrile-diene-carboxylic ester copolymers (i), the preferably silanized silica (ii) is better attached to the polymer matrix, which reduces filler-filler interactions. This is apparent from the amplitude-dependent **measurement of the loss modulus,** as shown in Fig. 1. While vulcanizates of the conventional hydrogenated nitrile-diene copolymer Therban^{®} 3407 comprising carbon black or silanized silica (Coupsil) have a higher loss modulus G" at low amplitudes, vulcanizates of the hydrogenated nitrile-diene-carboxylic ester copolymers comprising silica have a significant reduction in loss modulus compared to carbon black.

At the same time, at higher amplitudes, as a result of the dissolution of the filler-filler network, an elevated drop in loss modulus is observed for the copolymer. In the case of the vulcanizates comprising hydrogenated nitrile-diene-carboxylic ester copolymer, the change with elevated amplitude is significantly smaller, and particularly small in the case of use of silica/silanizing agent or silanized silica (Coupsil).

The particular advantage of the invention is that vulcanizates based on the hydrogenated nitrile-diene-carboxylic ester copolymers according to the invention, in combination with silica and preferably silanized silica, have a lower and hence improved **compression set** than conventional vulcanizates based on HNBR, **lower heat buildup** and an advantageous combination of low **glass transition temperature Tg,** measured according to DIN 53765, and lower **swelling in IRM 903,** measured according to DIN ISO 1817 at 150°C for 7 days.

In terms of the combination of these properties, the hydrogenated nitrile-diene-carboxylic ester copolymers according to the invention are superior to hydrogenated nitrile-diene-carboxylic ester copolymers commercially available to date.

## Claims

1. Vulcanizable composition comprising
i) hydrogenated nitrile-diene-carboxylic ester copolymer consisting of
(a) 0.1% to 38% by weight, preferably 10% to 33% by weight, and more preferably 8% to 25% by weight of at least one **α,β-ethylenically** unsaturated nitrile unit, which is acrylonitrile,
(b) 15% to 89.9 % by weight, preferably 21 to 70% by weight, and more preferably 25% to 65% by weight, of at least one conjugated diene unit, which is 1,3-butadiene and
(c) 10% to 65% by weight, preferably 21% to 79% by weight and more preferably 25% to 55% by weight of at least one α,β-ethylenically unsaturated carboxylic ester unit,
where at least 10% by weight, of the α,β-ethylenically unsaturated carboxylic ester units (c) based on the total amount of all monomer units of 100% by weight is a PEG acrylate
(d) of the general formula (I) 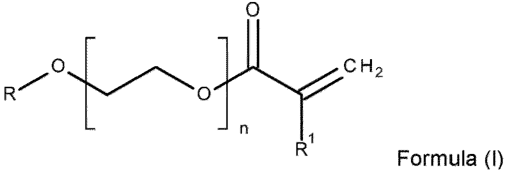 where
R is ethyl, butyl,
n is 2 or 3 and
R¹ is CH₃-,
ii) 25 to 80 parts by weight of at least one silica, based on 100 parts by weight of hydrogenated nitrile-diene-carboxylic ester copolymer (i) and
iii) at least one crosslinking agent.

2. Vulcanizable composition according Claim 1, **characterized in that** the conjugated diene units (b) have been hydrogenated to an extent of 50% to 100%.

3. Vulcanizable composition according to any one of the above Claims, wherein the at least one silica **(ii)** is unsilanized silica or silanized silica.

4. Vulcanizable composition according to any one of the above Claims, wherein the crosslinking agent (iii) is a peroxidic, sulfur-containing or an aminic crosslinker.

5. Process for producing vulcanizates, in the form of mouldings, **characterized in that** the vulcanizable composition according to any one of the above Claims is subjected to a vulcanization, in a shaping process and further at temperatures in the range from 100 °C to 250 °C.

6. Vulcanizates produced from vulcanizable compositions according to any of Claims 1 to 4, obtainable by the process according to Claim 5.

7. Vulcanizates according to Claim 6, **characterized in that** the mouldings are selected from belts, gaskets, rollers, footwear components, hoses, damping elements, stators and cable sheaths.

8. Use of the vulcanizable compositions according to any of Claims 1 to 4 for production of mouldings selected from the group consisting of belts, gaskets, rollers, footwear components, hoses, damping elements, stators and cable sheaths.

## Patentansprüche

1. Vulkanisierbare Zusammensetzung, enthaltend
i) hydriertes Nitril-Dien-Carbonsäureester-Copolymer, bestehend aus
(a) 0,1 bis 38 Gew.-%, bevorzugt 10 bis 33 Gew.-% und besonders bevorzugt 8 bis 25 Gew.-% mindestens einer α,β-ethylenisch ungesättigten Nitrileinheit, bei der es sich um Acrylnitril handelt,
(b) 15 bis 89,9 Gew.-%, bevorzugt 21 bis 70 Gew.-% und besonders bevorzugt 25 bis 65 Gew.-% mindestens einer konjugierten Dieneinheit, bei der es sich um 1,3-Butadien handelt, und
(c) 10 bis 65 Gew.-%, bevorzugt 21 bis 79 Gew.-% und besonders bevorzugt 25 bis 55 Gew.-% mindestens einer α,β-ethylenisch ungesättigten Carbonsäureestereinheit,
wobei mindestens 10 Gew.-% der a,β-ethylenisch ungesättigten Carbonsäureestereinheiten (c), bezogen auf die Gesamtmenge aller Monomereinheiten von 100 Gew.-%, ein PEG-Acrylat
(d) der allgemeinen Formel (I) 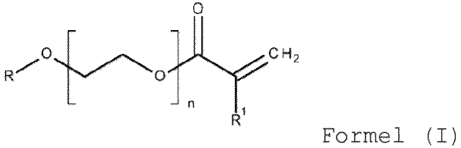 darstellen, wobei
R für Ethyl oder Butyl steht,
n für 2 oder 3 steht und
R¹ für CH₃- steht,
ii) 25 bis 80 Gewichtsteile mindestens eines Silicas, bezogen auf 100 Gewichtsteile hydriertes Nitril-Dien-Carbonsäureester-Copolymer (i), und
iii) mindestens ein Vernetzungsmittel.

2. Vulkanisierbare Zusammensetzung nach Anspruch 1, **dadurch gekennzeichnet, dass** die konjugierten Dieneinheiten (b) zu 50 % bis 100 % hydriert sind.

3. Vulkanisierbare Zusammensetzung nach einem der obigen Ansprüche, wobei es sich bei dem mindestens einen Silica (ii) um nicht silanisiertes Silica oder silanisiertes Silica handelt.

4. Vulkanisierbare Zusammensetzung nach einem der obigen Ansprüche, wobei es sich bei dem Vernetzungsmittel (iii) um einen peroxidischen, schwefelhaltigen oder aminischen Vernetzer handelt.

5. Verfahren zur Herstellung von Vulkanisaten in Form von Formteilen, **dadurch gekennzeichnet, dass** man die vulkanisierbare Zusammensetzung nach einem der obigen Ansprüche einer Vulkanisation in einem Formgebungsverfahren und ferner bei Temperaturen im Bereich von 100 °C bis 250 °C unterwirft.

6. Vulkanisate, hergestellt aus vulkanisierbaren Zusammensetzungen nach einem der Ansprüche 1 bis 4, erhältlich gemäß dem Verfahren nach Anspruch 5.

7. Vulkanisate nach Anspruch 6, **dadurch gekennzeichnet, dass** die Formteile aus Riemen, Dichtungen, Walzen, Schuhkomponenten, Schläuchen, Dämpfungselementen, Statoren und Kabelmänteln ausgewählt sind.

8. Verwendung der vulkanisierbaren Zusammensetzungen nach einem der Ansprüche 1 bis 4 zur Herstellung von Formkörpern, die aus der Gruppe bestehend aus Riemen, Dichtungen, Walzen, Schuhkomponenten, Schläuchen, Dämpfungselementen, Statoren und Kabelmänteln ausgewählt sind.

## Revendications

1. Composition vulcanisable comprenant
i) un copolymère de nitrile-diène-ester carboxylique hydrogéné constitué par
(a) 0,1 % à 38 % en poids, préférablement 10 % à 33 % en poids, et plus préférablement 8 % à 25 % en poids d'au moins un motif de nitrile éthyléniquement α,β-insaturé, qui est l'acrylonitrile,
(b) 15 % à 89,9 % en poids, préférablement 21 à 70 % en poids, et plus préférablement 25 % à 65 % en poids, d'au moins un motif de diène conjugué, qui est le 1,3-butadiène et
(c) 10 % à 65 % en poids, préférablement 21 % à 79 % en poids et plus préférablement 25 % à 55 % en poids d'au moins un motif d'ester carboxylique éthyléniquement α,β-insaturé,
au moins 10 % en poids, des motifs d'ester carboxylique éthyléniquement a,β-insaturé (c) sur la base de la quantité totale de tous les motifs monomériques de 100 % en poids étant un acrylate de PEG (d) de la formule générale (1) 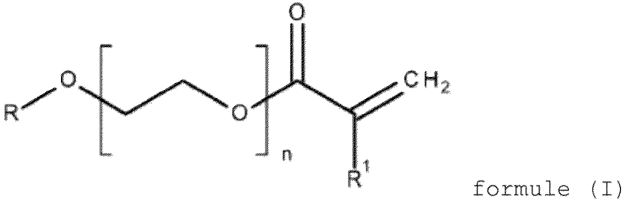
R étant éthyle, butyle,
n étant 2 ou 3 et
R¹ étant CH₃-,
ii) 25 à 80 parties en poids d'au moins une silice, sur la base de 100 parties en poids de copolymère de nitrile-diène-ester carboxylique hydrogéné (i) et
iii) au moins un agent de réticulation.

2. Composition vulcanisable selon la revendication 1, **caractérisée en ce que** les motifs de diène conjugué (b) ont été hydrogénés jusqu'à un degré de 50 % à 100 %.

3. Composition vulcanisable selon l'une quelconque des revendications ci-dessus, l'au moins une silice (ii) étant une silice non silanisée ou une silice silanisée.

4. Composition vulcanisable selon l'une quelconque des revendications ci-dessus, l'agent de réticulation (iii) étant un agent de réticulation peroxydique, contenant du soufre ou un agent de réticulation aminique.

5. Procédé pour la production de vulcanisats, sous la forme de moulages, **caractérisé en ce que** la composition vulcanisable selon l'une quelconque des revendications ci-dessus est soumise à une vulcanisation, dans un processus de façonnement et en outre à des températures dans la plage de 100 °C à 250 °C.

6. Vulcanisats produits à partir de compositions vulcanisables selon l'une quelconque des revendications 1 à 4, pouvant être obtenus par le procédé selon la revendication 5.

7. Vulcanisats selon la revendication 6, **caractérisés en ce que** les moulages sont choisis parmi des courroies, des joints, des rouleaux, des composants de chaussures, des tuyaux, des éléments d'amortissement, des stators et des gaines de câble.

8. Utilisation des compositions vulcanisables selon l'une quelconque des revendications 1 à 4 pour la production de moulages choisis dans le groupe constitué par des courroies, des joints, des rouleaux, des composants de chaussures, des tuyaux, des éléments d'amortissement, des stators et des gaines de câble.
